# EUROPÄISCHE PATENTSCHRIFT

(11) **EP 2 879 911 B1**
(45) Veröffentlichungstag und Bekanntmachung des Hinweises auf die Patenterteilung: **20.11.2019**
(21) Anmeldenummer: 13756298.9
(22) Anmeldetag: 30.07.2013
(51) Int. Cl.: B60N 2/80, B60N 2/876, B60N 2/835, B60N 2/829, B60N 2/859, B60N 2/853

(54) **VERSTELLBARE KOPFSTÜTZE**
ADJUSTABLE HEAD-REST
APPUIE-TÊTE RÉGLABLE

(30) Priorität: 31.07.2012 DE 102012213503
(43) Veröffentlichungstag der Anmeldung: 10.06.2015
(73) Patentinhaber: GRAMMER AG, 92224 Amberg (DE)
(72) Erfinder: WINKELBACH, Carsten, 53489 Sinzig (DE); SEIDEL, Christoph, 97346 Iphofen (DE); STEINMETZ, Rolf, 40489 Düsseldorf (DE)
(74) Vertreter: Roche, von Westernhagen & Ehresmann
(86) Internationale Anmeldenummer: PCT/DE2013/000417
(87) Internationale Veröffentlichungsnummer: WO 2014/019566

(56) Entgegenhaltungen:
- DE-A1- 3 136 648
- DE-A1- 3 911 763
- DE-A1- 10 012 973
- DE-A1- 10 038 813
- DE-C1- 19 953 757
- FR-A1- 2 796 345
- FR-A1- 2 910 406
- FR-A1- 2 962 949

## Beschreibung

Die Erfindung betrifft eine Kopfstütze mit einem Tragteil zur Befestigung an bzw. bei einem Sitz mit einem relativ zum Tragteil verstellbaren Kissenteil gemäß dem Oberbegriff des Anspruchs 1.

Kopfstützen sind in vielfältiger Art aus dem Stand der Technik bekannt. Hierbei wird vielfach gefordert, dass diese zur ergonomischen Anpassung in der Höhe verstellbar sind. Weiterhin sind Ausführungsformen bekannt, bei denen vorgesehen ist, dass diese zwischen einer Gebrauchsstellung und einer Nichtgebrauchsstellung umgeklappt werden können.

Eine bekannte Ausführungsform einer verstellbaren Kopfstütze offenbart die Druckschrift DE 10 2010 038 250 A1. Diese weist ein Tragteil mit zwei Rundstäben zur üblichen Befestigung am Sitz auf. Eine Verstellbarkeit des Tragteils relativ zum Sitz ist zwar nicht vorgesehen, jedoch hinlänglich bei derartigen Tragteilen mit Rundstäben aus dem Stand der Technik bekannt. Weiter ist am Tragteil das Kissenteil zur Abstützung des Kopfes der auf dem Sitz sitzenden Person gelagert. Zur ergonomischen Anpassung ist das Kissenteil längs einer Stangenführung relativ zum Tragteil verschiebbar. Das Kissenteil wird hierbei gebildet von einem Polsterkörper und einem den Polsterkörper stützenden Stützkörper. Im Stützkörper ist weiterhin zur Realisierung der Verstellbarkeit des Kissenteils an oberer Seite eine nutenartige obere Kulissenführung vorhanden, welche von einem oberen Querbügel des Tragteils durchsetzt ist. Eine weitere Lagerungsstelle bildet eine geradlinige parallel zur Kulissenführung verlaufende Stangenführung als Abschnitt bei den beiden beabstandeten feststehenden Stangen des Tragteils. Folglich kann das Kissenteil linear längs der Stangenabschnitte des Tragteils zugleich längs der Nut im Stützkörper verschoben werden.

Ebenso ist es aus dem Stand der Technik bekannt, zur Höhenverstellung eine Verstellmöglichkeit zwischen der Kopfstütze und dem Sitz durch Verstellen des Tragteils im Sitz ebenfalls entlang geradliniger Stangenabschnitte zu realisieren.

Weiterhin sind andere Umklappsysteme bekannt, um insbesondere für den Fall des Nichtgebrauchs, ein Wegklappen des Kissenteils zu bewirken. In der Regel wird jedoch eine möglichst ungehinderte Sicht dadurch angestrebt, dass das Kissenteil möglichst weit nach unten verschiebbar ist.

Wenngleich mit den Ausführungen aus dem Stand der Technik eine variable Verstellung des Kissenteils ermöglicht wird, weisen die bekannten Ausführungen einerseits den Nachteil eines komplexen Aufbaus und andererseits den Nachteil der umständlichen Verstellung, insbesondere bei erforderlicher Verstellung sowohl innerhalb der Kopfstütze als auch zwischen Kopfstütze und Fahrzeugsitz, auf. Die Fr2910406 zeigt eine Kopfstütze mit einem Kissenteil, welches zumindest ein auf einer Vorderseite angeordnetes Polsterelement und ein das Polsterelement stützendes Stützelement umfasst, und mit einem Tragteil, welches Verbindungsmittel zur starren Befestigung an/bei einem Fahrzeugsitz umfasst, und mit einer Kulissenführung, welche Führungselemente und an den Führungselementen entlang verschiebbare Gleitelemente umfasst, wobei die Kulissenführung eine Lagerung des Kissenteils am Tragteil bewirkt, und wobei die Kulissenführung eine Verstellung des Kissenteils zwischen einer unteren Funktionsstellung und einer oberen Funktionsstellung entlang eines Verstellweges ermöglicht, wobei die Kulissenführung bei Verstellung des Kissenteils entlang des Verstellwegs zumindest abschnittsweise ein Verschwenken des Kissenteils um eine Horizontalachse mit sich ändernder Winkelstellung relativ zum Tragteil bewirkt.

Aufgabe der vorliegenden Erfindung ist es daher, eine vereinfachte Verstellung des Kissenteils zu realisieren, welches hierbei zum einen die Verstellbarkeit innerhalb eines Gebrauchsbereichs zur ergonomischen Anlage des Kopfes als auch zugleich eine Verstellbarkeit des Kissenteils zur Erzielung einer möglichst freien Sicht in einer Nichtgebrauchsstellung betrifft.

Die vorliegende Aufgabe wird durch eine erfindungsgemäße Ausführungsform nach dem Anspruch 1 gelöst.

Vorteilhafte Ausführungsformen sind Gegenstand der Unteransprüche.

Die gattungsgemäße Kopfstütze weist zunächst einmal ein Kissenteil auf, welches wiederum als Komponenten ein Polsterelement und ein Stützelement umfasst. Welcher Art hierbei das Posterelement ist, ist zunächst unerheblich. Aufgabe des Polsterelements ist es, eine hinreichend komfortable Anlage des Kopfs am Kissenteil zu ermöglichen. Je nach Anforderung an den Komfort und den zu berücksichtigen Bauraum- und Gewichts- und Kostenbeschränkungen kann es sich hierbei beispielsweise um einen Stoffbezug, als auch ebenso um ein geschäumtes Bauteil, wie auch ebenso um ein mit einem Bezug überspanntes und hinterschäumtes Element handeln. Das Stützelement bildet die Abstützung des ansonsten labilen Polsterelements und ermöglicht zugleich eine Lagerung des Kissenteils am Tragteil.

Zur Anbindung der Kopfstütze im Fahrzeug weist das Tragteil Verbindungsmittel auf, welche bestimmt sind zur starren Befestigung bei oder an einem Fahrzeugsitz. Welcher Art die Verbindungsmittel hierbei sind, ist für die vorliegende Erfindung unerheblich. Insofern kann es sich beispielsweise um die im Stand der Technik üblichen Befestigungsstangen handeln, wobei jedoch ebenso andere Formgebungen möglich sind. Weiterhin ist es unerheblich, ob die Verbindungsmittel eine Demontage der Kopfstütze durch den Fahrer zulassen, oder ob die Kopfstützen nicht entfernbar montiert sind.

Weiterhin umfasst die Kopfstütze eine Kulissenführung, welche eine Lagerung des Kissenteils am Tragteil bewirkt. Hierbei umfasst die Kulissenführung wiederum Führungselemente und entlang der Führungselemente verschiebbare Gleitelemente. Die Zuordnung der Führungselemente und Gleitelemente zum Kissenteil bzw. zum Tragteil ist gattungsgemäß zunächst unerheblich. Zumindest ermöglicht die Kulissenführung eine Verstellung des Kissenteils entlang eines Verstellwegs durch die Verschiebbarkeit der Gleitelemente entlang der Führungselemente. Begrenzt wird der Verstellweg zum einen in einer oberen Funktionsstellung des Kissenteils sowie bei einer unteren Funktionsstellung des Kissenteils. Ob die Begrenzung des Verstellwegs durch den Aufbau der Kulissenführung selber erfolgt oder ob zu diesem Zweck eine anderweitige Begrenzung vorgesehen ist, ist ohne Belang. Die obere Funktionsstellung ist zugleich auch die oberste Stellung des Kissenteils bei Nutzung als Kopfstütze in der Gebrauchsstellung, während hingegen die untere Funktionsstellung zwar gattungsgemäß auch eine Gebrauchsstellung sein könnte, jedoch primär die Nichtgebrauchsstellung darstellt.

Erfindungsgemäß wird eine komfortable Verstellung des Kissenteils durch eine derartige Ausführung der Kulissenführung, d.h. folglich der Führungselemente und Gleitelemente, erzielt, welche beim Verstellen des Kissenteils entlang des Verstellwegs zumindest abschnittsweise ein Verschwenken des Kissenteils um eine Horizontalachse bewirkt. Das Schwenken des Kissenteils bewirkt zugleich eine Änderung der Winkelstellung des Kissenteils relativ zum Tragteil.

Durch die neuartige Kulissenführung wird es ermöglicht, dass die Kopfstütze nicht nur linear zwischen zwei Endstellungen verschoben werden kann, sondern vielmehr kann das Kissenteil zumindest in einem Abschnitt des Verstellwegs zugleich geschwenkt werden, wodurch neue Verstellmöglichkeiten geschaffen werden. Somit wird die Realisierung einer Verstellung innerhalb einer Gebrauchsstellung und zwischen Gebrauchsstellung und Nichtgebrauchsstellung deutlich gegenüber den bekannten Ausführungen vereinfacht, wobei die erfindungsgemäße Ausführung uneingeschränkt auch zur reinen Verstellung innerhalb eines Gebrauchsbereichs oder nur zur Verstellung zwischen Gebrauch und Nichtgebrauch eingesetzt werden kann.

Hierbei weisen in besonders vorteilhafter Weise die Führungselemente einen diskontinuierlichen und/oder zumindest abschnittsweise bogenförmigen Verlauf auf. Hieraus folgernd ändert sich entlang des Verstellwegs mindestens einmalig der Krümmungsradius. Hierunter inbegriffen ist ebenso eine Änderung von einem Abschnitt mit einer linearen Führung und somit einem unendlichen Krümmungsradius übergehend zu einem bogenförmigen Verlauf mit bestimmten Krümmungsradius. Wenngleich eine Umsetzung der folgenden Ausführung nicht zweckmäßig erscheint, ist es ebenso denkbar, einen diskontinuierlichen Verlauf der Führungselemente mit jeweils linearen Abschnitten zu wählen.

Durch die Abkehrung vom Stand der Technik einer linearen Verstellung des Kissenteils entlang einer geradlinigen Nut bzw. entlang eines geradlinigen Abschnitts von Führungsstangen wird erfindungsgemäß ein abschnittsweise bogenförmiger oder diskontinuierlicher Verlauf vorgeschlagen. Hierdurch kann in besonders vorteilhafter Weise ein Schwenken der Kopfstütze im Bereich des bogenförmigen Abschnitts bzw. im diskontinuierlichen Verlauf realisiert werden.

Durch diese neuartige Möglichkeit der Verstellung des Kissenteils unter Verwendung einer entsprechenden nicht nur linearen Kulissenführung wird es besonders ermöglicht, das Kissenteil sowohl innerhalb eines Gebrauchsbereichs beginnend von der oberen Funktionsstellung, d.h. oberen Gebrauchsstellung, zu verstellen zu können als auch nunmehr die Verstellung in eine unter Funktionsstellung als Nichtgebrauchsstellung möglich ist, wobei das Besondere hierbei die Änderung der Winkelstellung ist. D.h., das Kissenteil kann in der Nichtgebrauchsstellung eine von der Gebrauchsstellung abweichende Winkelstellung aufweisen und somit eine günstigere Position einnehmen als es nur mit einer linearen Verstellung möglich wäre, wobei es eines ansonsten notwendigen Schwenkmechanismus nicht bedarf.

Eine Änderung der Winkelstellung kann kontinuierlich über den gesamten Verstellweg von der oberen Funktionsstellung bis zur unteren Funktionsstellung erfolgen. Besonders vorteilhaft ist es jedoch, wenn die Kulissenführung derart ausgeführt ist, dass sich die Winkelstellung des Kissenteils relativ zum Tragteil in unterschiedlichen Abschnitten des Verstellwegs in unterschiedlicher Art ändert.

Ein oberer Abschnitt kann hierbei einen Gebrauchsbereich bilden, welcher sich hierbei von der oberen Funktionsstellung, d.h. der oberen Gebrauchsstellung, bis zu einer unteren Gebrauchsstellung erstreckt. Die untere Gebrauchsstellung bildet bezogen auf den gesamten Verstellweg somit eine mittlere Funktionsstellung. Das Kissenteil kann mittels der in der Kopfstütze integrierten Kulissenführung hierbei innerhalb des ergonomischen Gebrauchsbereichs zur Anlage des Kopfs am Kissenteil verstellt werden.

Weiterhin kann ein unterer Abschnitt des Verstellwegs zwischen der unteren Funktionsstellung und der mittleren Funktionsstellung betrachtet werden. Diesbezüglich kann beispielsweise die untere Funktionsstellung die Nichtgebrauchsstellung darstellen, wobei die mittlere Funktionsstellung die untere Gebrauchsstellung realisiert. Das heißt, innerhalb des Bereichs zwischen der mittleren Funktionsstellung und der unteren Funktionsstellung ist keine sinnvolle Position des Kissenteils vorhanden, sondern es wird vielmehr der Übergang zwischen der Gebrauchsstellung und der Nichtgebrauchsstellung realisiert. Somit wird mit selbiger, in der Kopfstütze integrierten Kulissenführung eine Verstellung des Kissenteils in eine die Sicht des Fahrers möglichst wenig behindernde Nichtgebrauchsstellung ermöglicht.

Eine Änderung der Winkelstellung wird bevorzugt im unteren Abschnitt im Wechseln von der Gebrauchsstellung in die Nichtgebrauchsstellung stattfinden. Hingegen bedarf es innerhalb des oberen Abschnitts, d.h. des Gebrauchsbereichs quasi keiner Winkeländerung.

Ob die Winkeländerung im unteren Abschnitt kontinuierlich erfolgt ist ebenso zunächst unerheblich. Bevorzugt wird jedoch eine diskontinuierliche Änderung der Winkelstellung, wobei diese ab der mittleren Funktionsstellung zunächst beschleunigt erfolgt, sodann jedoch wieder abnimmt, wobei beispielsweise der letzte Wegabschnitt zur unteren Funktionsstellung linear ausgeführt sein kann.

Innerhalb der relevanten Abschnitte, d.h. dem oberen Abschnitt zwischen oberer Funktionsstellung und mittlerer Funktionsstellung sowie dem unteren Abschnitt zwischen mittlerer Funktionsstellung und unterer Funktionsstellung, sei jeweils ein abschnittsweiser, d.h. inkrementeller Verstellweg angenommen, welcher entsprechend des Verlaufs der Führungselemente am betrachteten inkrementellen Abschnitt zu einer Änderung der Winkelstellung des Kissenteils führt.

Wird nun die größte im unteren Abschnitt auftretende Änderung der Winkelstellung bei inkrementeller Verstellung ausgewählt, so ist diese Änderung der Winkelstellung in bevorzugter Ausführung der Kopfstütze zumindest doppelt so hoch, wie jede Änderung der Winkelstellung bei äquivalenter inkrementeller Verstellung innerhalb des oberen Abschnitts. Dies gilt vorzugsweise unabhängig von dem konkreten Verlauf der Führungselemente, d.h. unabhängig davon, ob der obere Abschnitt linear verläuft oder ebenfalls gekrümmt ist, und unabhängig davon, ob der untere Abschnitt eine konstante oder sich ändernde Krümmung aufweist. In besonders bevorzugter Ausführung ist die maximal auftretende Änderung der Winkelstellung bei inkrementeller Verstellung im unteren Abschnitt 5-fach so hoch wie die jede Änderung der Winkelstellung im oberen Abschnitt.

Durch die insbesondere im unteren Abschnitt des Verstellwegs vorhandene Änderung der Winkelstellung wird besonders vorteilhaft eine Verstellung des Kissenteils aus der Gebrauchsstellung in eine Nichtgebrauchsstellung ermöglicht. Hingegen wird es bevorzugt, dass sich die Winkelstellung des Kissenteils im Gebrauchsbereich zwischen mittlerer Funktionsstellung und oberer Funktionsstellung allenfalls geringfügig ändert.

In gleicher Weise ist es vorteilhaft, wenn sich die Winkelstellung beim Verstellen von der oberen Funktionsstellung zu einer mittleren Funktionsstellung um höchstens 10° ändert. Die mittlere Funktionsstellung stellt hierbei eine untere Gebrauchsstellung dar, d.h. im Bereich zwischen mittlerer Funktionsstellung und oberer Funktionsstellung findet das Kissenteil Verwendung als eigentliche Kopfstütze. In diesem Abschnitt des Verstellwegs ist bei Gebrauch der Kopfstütze in aller Regel eine Winkelverstellung eher unerwünscht. Entsprechend ist es vorteilhaft, wenn bei Verstellung des Kissenteils entlang des oberen Abschnitts des Verstellwegs eine besonders vorteilhaft geringe Änderung der Winkelstellung um höchstens 5° eintritt.

Hingegen ist es vorteilhaft, wenn bei einer Verstellung von der mittleren Funktionsstellung zur unteren Funktionsstellung, d.h. zu einer vorteilhaften Nichtgebrauchsstellung, eine Änderung der Winkelstellung zumindest 10° beträgt, wobei es besonders vorteilhaft ist, ein Schwenken des Kissenteils um 15° zu bewirken. Hierdurch wird, im Gegensatz zur Verstellung im oberen Abschnitt, im unteren Abschnitt eine größere Winkeländerung bewirkt, sodass eine günstige Verstellung in einer Nichtgebrauchsposition realisiert wird, bei welcher das Kissenteil eine zusätzlich tiefere Position einnehmen kann, als es ohne Schwenken möglich wäre.

Weiterhin ist es besonders vorteilhaft, wenn sich beim Verstellen des Kissenteils von der mittleren Funktionsstellung in die untere Funktionsstellung ein Schwenken des unteren Endes des Kissenteils nach vorne, d.h. auf einer zu einer sitzenden Person weisenden Seite des Kissenteils, und des oberen Endes des Kissenteils nach hinten, d.h. auf einer von einer sitzenden Person abweisenden Seite des Kissenteils, erfolgt. Somit wird einerseits der in der Höhe erforderliche Platzbedarf für das Kissenteil in der Nichtgebrauchsstellung reduziert und eine tiefere Position ermöglicht. Besonders an dieser neuartigen bevorzugten Stellung ist jedoch, dass ein Hineinragen in den Sitzbereich in der Nichtgebrauchsstellung bewirkt werden kann. Somit wird eine Person bei Nutzung des Sitzes aufgrund mangelnden Komforts der Nichtgebrauchsstellung angehalten, das Kissenteil in eine Gebrauchsstellung zu verstellen.

Erfindungsgemäß sind die Führungselemente der Kulissenführung am Kissenteil und die Gleitelemente der Kulissenführung am Tragteil angeordnet. Dies betrifft sämtliche bei der Kulissenführung vorhandenen Führungselemente als auch Gleitelemente. Während es hingegen in Ausführungsformen aus dem Stand der Technik üblich ist, Führungen durch Abschnitte der Stangen des Tragteils zu realisieren, erfolgt vorteilhaft hingegen eine Umkehrung, wobei am Tragteil die Gleitelemente vorhanden sind, während hingegen die Führungselemente am Kissenteil angeordnet sind.

Hierbei wird vorteilhaft eine über die Mitte symmetrische Ausführung gewählt, so dass eine verbesserte Stabilität und Führung erzielt wird. Das heißt, dass zumindest zwei Führungselemente über eine Mittelebene gegenüberliegend symmetrisch angeordnet sind. Weiterhin sind vorteilhaft am Tragteil beidseitig jeweils zwei Gleitelemente vorhanden, welche hierzu ebenso symmetrisch zur Mittelebene ausgeführt sind. Durch diese symmetrische Ausführung der Kulissenführung wird sowohl eine verbesserte Stabilität in der Lagerung des Kissenteils am Tragteil erreicht, als auch ebenso die Führung des Kissenteils am Tragteil entlang des Verstellwegs vorteilhaft beeinflusst wird.

Die Ausführungsform der Führungselemente ist zunächst beliebig, solange gewährleistet wird, dass die Gleitelemente entlang der Führungselemente unter Verstellung des Kissenteils gleiten können. Das heißt, im eigentlichen Sinn sind die Gleitelemente die stehenden Elemente während hingegen die Führungselemente samt Kissenteil bewegt werden.

In besonders vorteilhafter Ausführungsform weist hierbei jedes Führungselement eine vordere Führungsfläche und eine der vorderen Führungsfläche gegenüberliegende hintere Führungsfläche auf. Hierbei ist es zunächst unerheblich, ob der Abstand zwischen der vorderen Führungsfläche und der hinteren Führungsfläche über den gesamten Verstellweg konstant ist oder hierbei einen veränderlichen Abstand aufweist. Dies ist insbesondere abhängig von der Wahl der Ausführung der Gleitelemente als auch ebenso von der Wahl und Einstellung eines Spiels bzw. einer gewollten Klemmung in der Führung. Ebenso ist es zunächst unerheblich, ob die Führungsflächen betrachtet in Richtung der Horizontalachse auf gleicher Höhe angeordnet sind oder hierbei versetzt zueinander positioniert sind. Zumindest wird durch die vordere Führungsfläche und die hintere Führungsfläche gewährleistet, dass durch jeweils daran anliegende Gleitelemente eine Abstützung des Kissenteils sowohl nach vorne als auch nach hinten erfolgt. Somit wird eine sichere Führung des Kissenteils am Tragteil gewährleistet.

Hierzu bedarf es entsprechend zumindest eines vorderen gewölbten Gleitelements, welches entlang der vorderen Führungsfläche gleiten kann, sowie zumindest eines hinteren gewölbten Gleitelements zur Anlage an der hinteren Führungsfläche. Die vordere Führungsfläche ist hierbei relativ zum vorderen Gleitelement auf der zum Polsterelement weisenden Seite angeordnet, während hingegen die hintere Führungsfläche relativ zum hinteren Gleitelement auf der vom Polsterelement wegweisenden Seite des Gleitelements angeordnet ist.

Die Führungselemente, d.h. die Führungsflächen sowie die Gleitelemente sind in besonders vorteilhafter Weise derart aufeinander abzustimmen, dass einerseits eine Bewegung des Kissenteils entlang des Verstellwegs möglich ist und anderseits eine Kraftübertragung von den Führungsflächen des Kissenteils auf die Gleitelemente des Tragteils gewährleistet wird. Besonders vorteilhaft ist es, wenn die Abstimmung eine Selbsthemmung beim Loslassen des Kissenteils gewährleistet und somit ein selbsttätiges Verschieben ohne Betätigung verhindert wird.

Zur Realisierung der Gleitelemente zur Anlage an vorderer und hinterer Führungsfläche ist es in einer Ausführungsform möglich, je vorderer Führungsfläche zwei vordere Gleitelemente einzusetzen und zwischenliegend ein einzelnes hinteres Gleitelement in Anlage an der hinteren Führungsfläche. Somit kann eine Abstützung und Führung des Kissenteils entlang des diskontinuierlichen bzw. abschnittsweise bogenförmigen Verlaufs der Führungselemente ermöglicht werden.

Besonders vorteilhaft ist es jedoch, wenn sowohl zwei vordere Gleitelemente zur Anlage an den vorderen Führungsflächen als auch ebenso zwei hintere Gleitelemente zur Anlage an den hinteren Führungsflächen jeweils beabstandet zueinander verwendet werden. Hierbei ist es in einer besonders vorteilhaften Weise möglich, vorderes und hinteres Gleitelement gemeinsam als ein bolzenartiges Gleitelement auszuführen. Dabei können die Führungselemente in vorteilhafter Weise nutenförmig ausgeführt werden. Dies vereinfacht sowohl die Auslegung der Kulissenführung als auch die Herstellung des gesamten Kissenteils mit den Kulissenführungen.

In weiterer alternativer Ausführungsform ist es ebenso möglich, anstelle der Führung von zwei Gleitelementen entlang eines einzelnen Führungselements ebenso die Ausführung vorzusehen, in derer jedes Gleitelement in einem einzelnen Führungselement gleitet. Entsprechend bedarf es diesbezüglich einer Ausführung mit vier Führungselementen sowie den zugehörigen vier Gleitelementen.

Zur Gewährleistung der Stabilität insbesondere im Crashfall ist es vorgesehen, dass am Kissenteil weiterhin zumindest ein Abstützelement und am Tragteil zumindest ein Anlageelement vorhanden ist. Hierbei ist das Anlageelement bestimmt, am Abstützelement zur Anlage zu kommen, zumindest sofern auf die Vorderseite des Kissenteils eine Belastung wirkt. Weiterhin ist diese Anlage in oberer Funktionsstellung vorgesehen und wird in besonders vorteilhafter Weise im Bereich zwischen mittlerer Funktionsstellung und oberer Funktionsstellung eingesetzt. Hierbei ist es nicht zwingend, dass die Anlage im Normalfall, d.h. im nicht belasteten Fall bereits vorhanden ist, sondern vielmehr kann es vorteilhaft sein, wenn ein minimaler Spalt zwischen Anlageelement und Abstützelement vorgesehen ist und nur im Belastungsfall eine Abstützung erfolgt. Hiervon unbenommen ist die Möglichkeit, ebenso das Abstützelement entlang des gesamten Verstellwegs der Kulissenführung auszuführen, so dass unabhängig von der Position des Kissenteils eine Anlage des Abstützelements am Anlageelement erfolgen kann.

Weiterhin ist es vorteilhaft, wenn zumindest ein Halteelement in Art eines elastisch deformierbaren Körpers derart in der Kopfstütze integriert wird, dass dieses Halteelement beim Verstellen des Kissenteils entlang des Verstellwegs elastisch verformt wird. Hierbei kann vorgesehen sein, dass dieses Halteelement über den gesamten Verstellweg ein Halten des Kissenteils in jeweils aktueller Stellung bewirkt. Alternativ kann das Halteelement das Kissenteil im Bereich zwischen mittlerer Funktionsstellung und oberer Funktionsstellung gegen ein unbeabsichtigtes Verschieben sichern. Weiterhin kann vorgesehen sein, dass nur abschnittsweise und/oder in einzelnen Positionen ein Halten des Kissenteils erfolgt.

Diesbezüglich kann das Halteelement sowohl im Gleitelement, im Führungselement, am Abstützelement oder am Anlageelement integriert sein. Durch die entsprechende Wahl der Geometrie der Führungselemente als auch der Abstützelemente sowie des entsprechenden Abstands, Spiels oder Klemmung kann eine vorteilhaft elastische Verformung des Halteelements bewirkt werden, welche somit den Halt des Kissenteils entlang des Verstellwegs sichert.

Dazu kann das Halteelement in vorteilhafter Weise aus einem komprimierbaren Werkstoff, beispielsweise einem Elastomer, hergestellt sein. Das Halteelement kann sowohl zugleich ein Abschnitt einer Führungsfläche bilden als auch Teil eines Gleitelements sein.

Zur kostengünstigen Umsetzung der Kopfstütze wird in besonders vorteilhafter Weise das Stützelement des Kissenteils als einstückiges oder mehrteiliges Kunststoffbauteil ausgeführt. Hierbei sind die Führungselemente und sofern vorhanden Abstützelemente integral im Stützelement zu integrieren, so dass diesbezüglich kein Mehraufwand für zusätzliche Bauteile entsteht. Durch eine Ausführung insbesondere als kostengünstiges Spritzgussbauteil kann somit eine besonders kostengünstige Kopfstütze mit integrierter Verstellung durch die Kulissenführung realisiert werden.

Unerheblich ist es diesbezüglich ob andere Funktionselemente, beispielsweise eine Stahl-Rückholfeder, im Kissenteil am Stützelemente montiert werden. Ebenso kann es - wie zuvor beschrieben - besonders vorteilhaft sein, beispielsweise einen Abschnitt der Führungselemente mit einem elastischen Halteelement zu versehen, welches wiederum beispielsweise aus Gummi sein kann. Hinsicht des Recyclings ist jedoch anzustreben, dass ein ohne besonderen Zerlegeaufwand recyclingfähiges Kissenteil vorhanden ist.

Aufgrund der vorteilhaft erforderlichen Führungselemente am Kissenteil und der hierdurch bedingten Herstellungsweise mit zumindest bereichsweise offen liegender Kulissenführung am Stützelement wird in vorteilhafter Weise auf einer zur Vorderseite gegenüberliegenden Rückseite und/oder einer zum Fahrzeugsitz weisenden Unterseite ein die Führungselemente, Gleitelemente, Abstützelemente und/oder Anlageelemente verdeckendes Abdeckelement angeordnet. Hierbei bedarf es der notwendigen Freihaltung des für das relativ verstellbare Tragteil erforderlichen Bauraums. Ansonsten kann das Kissenteil vollständig sowohl durch das Polsterelement mit Stützelement als auch durch das hintere Abdeckelement abgedeckt werden und bildet insofern einen weitgehend - bis auf Ausnehmungen für das relativ bewegliche Tragteil - geschlossenen Körper.

Weiterhin umfasst die Kopfstütze in vorteilhafter Weise eine Rastvorrichtung, welche hierbei zwischen Kissenteil und Tragteil wirkt und bei Verrasten einem Verschieben entlang des Verstellwegs entgegenwirkt. Hierbei kann in einfachster Weise vorgesehen sein, dass lediglich eine einzelne Raststellung vorhanden ist, in welcher eine Verrastung erfolgt als auch ebenso in vorteilhafter Weise eine Mehrzahl von Raststellungen vorhanden ist.

In welcher Art das Verrasten und das Ausrasten erfolgt ist zunächst unerheblich. In besonders vorteilhafter Weise erfolgt das Verrasten jedoch selbsttätig. Das heißt, dass bei Verschieben des Kissenteils entlang des Verstellwegs automatisch beim Erreichen der entsprechenden Raststellung ein Verrasten erfolgt, sofern nicht eine Entriegelungsvorrichtung dieses verhindert. Das Ausrasten hingegen kann in vielfältiger Weise realisiert sein. Zum einen ist es diesbezüglich möglich, ein Ausrasten durch Aufbringen einer erhöhten Kraft auf das Kissenteil beim Verstellen entlang des Verstellwegs zu bewirken. Das heißt, dass der Benutzer beim Verstellen des Kissenteils entlang des Verstellwegs bei Erreichen der Raststellung einen erhöhten Kraftaufwand aufbringen muss, um die Raststellung zu überwinden.

In besonders vorteilhafter Weise ist die Rastvorrichtung derart ausgeführt, dass ein Verrasten bei einem Verschieben des Kissenteils entlang des Verstellwegs von der unteren Funktionsstellung zur oberen Funktionsstellung entweder gar nicht erfolgt oder das Verrasten derart unmerklich erfolgt, dass ein Weiterschieben entlang des Verstellwegs ungehindert möglich ist, d.h. das Ausrasten erfordert in diesem Fall in der nach oben gerichteten Verstellung keine spürbar höhere Kraft. Hingegen erfordert das Ausrasten bei einer Verstellung des Kissenteils in Richtung von der oberen Funktionsstellung hin zur unteren Funktionsstellung entweder einen erhöhten Kraftaufwand oder eine Betätigung einer Entriegelungsvorrichtung. Insbesondere durch diese Ausführung wird gewährleistet, dass bei einer Anlage des Kopfs am Kissenteil das Kissenteil in jeweiliger Raststellung verbleibt, ohne dass es zu einem unbeabsichtigten Verschieben nach unten kommt. Hingegen kann das Kissenteil ohne merklichen Kraftaufwand sowie ohne Betätigung nach oben verschoben werden.

Die Realisierung der Rastvorrichtung kann sowohl durch Integration in die Kulissenführung erfolgen als auch durch separate Mittel. Beim Einsatz der Kulissenführung zugleich als Rastvorrichtung kann beispielsweise bei einer nutenartigen Ausführung der Führungselemente die Nutbreite variiert werden, so dass eine unterschiedliche Klemmkraft der Gleitelemente in der Führungsnut vorhanden ist.

Vorteilhaft ist es jedoch bei Vorhandensein von Abstützelementen diese zur Anordnung der Rastvorrichtung einzusetzen. Hierzu erhalten die Abstützelemente je Rastung eine Rastvertiefung, wobei ein am Tragteil angeordnetes Rastelement in der Rastvertiefung einrasten kann.

Hierbei kann in vorteilhafter Weise ein am Tragteil verstellbares Rastelement vorgesehen sein, welches durch eine Entriegelungsvorrichtung derart verstellt werden kann, dass ein Abheben des Rastelements aus der Rastvertiefung erfolgt, wodurch eine freie Verstellbarkeit des Kissenteils erreicht wird.

Weiterhin umfasst die Kopfstütze in vorteilhafter Weise eine Rückholvorrichtung, welche eine unterstützende oder selbsttätige Verstellung des Kissenteils in Richtung von der oberen Funktionsstellung zur unteren Funktionsstellung bewirken kann. Hierbei basiert die Rückholeinrichtung auf einem mechanischen und/oder pneumatischen Federelement, welches bei einer Verstellung des Kissenteils von unterer Funktionsstellung zur oberen Funktionsstellung vorgespannt wird und hierdurch Rückholen ermöglicht. Um ein ungewolltes Absenken des Kissenteils in Richtung unterer Funktionsstellung zu verhindern, bedarf es zugleich der Rastvorrichtung. Bei Betätigung der Entriegelungsvorrichtung kann somit ein automatisches Absenken des Kissenteils durch das Federelement erfolgen.

In besonders vorteilhafter Weise umfasst die Rückhohleinrichtung einen Seilzugs, wobei je nach Zuordnung des Federelements eine Verbindung vom am Kissenteil angeordneten Federelement über den Seilzug zum Tragteil erfolgt oder im umgekehrten Fall vom am Tragteil angeordneten Federelement über den Seilzug zum Kissenteil.

Beim Einsatz einer automatischen Rückholeinrichtung ist es weiterhin besonders vorteilhaft, wenn die Entriegelungsvorrichtung mittels eines elektromechanischen Aktuators bewegt werden kann, wobei ein von der Kopfstütze entfernt angeordnetes Betätigungselement zur Auslösung des Aktuators und Entriegelung und somit zum Absenken des Kissenelements eingesetzt wird. Somit wird es beispielsweise einem Fahrer komfortabel ermöglicht, durch Auslösen der Entriegelungsvorrichtung automatisch vom Vordersitz aus eine Kopfstütze eines rückwärtigen Sitzes in die untere Funktionsstellung durch das automatische Absenken des Kissenteils mittels der Rückholeinrichtung zu verstellen.

Eine besonders komfortable Verstellung des Kissenteils wird erzielt, wenn eine elektromotorische Verstellung des Kissenteils eingesetzt wird. Hierzu ist am Tragteil ein Elektromotor mit einem von diesem antreibbaren Antriebsrad einzusetzen, wobei das Kissenteil eines sich über den gesamten Verstellweg erstreckenden Abtriebselements bedarf. Das Antriebsrad kann hierbei sowohl ein Zahnrad als auch ein Reibrad sein, wobei entsprechend das Abtriebselement eine Reibfläche bzw. eine zahnstangenartige Kontur aufweist. Durch Antrieb des Elektromotors und dem Drehen des Antriebrads erfolgt eine Verstellung des Kissenteils durch Bewegung des Antriebrads entlang des Abtriebselements. Hierzu bedarf es einer Ansteuerung des Elektromotors zur Verstellung des Kissenelements, wobei dieses wahlweise an der Kopfstütze in vorteilhafter Weise jedoch entfernt angeordnet ist.

In den nachfolgenden Figuren wird eine vorteilhafte Ausführungsform einer erfindungsgemäßen Kopfstütze beispielhaft erläutert:
Es zeigen:
- Fig. 1: eine Kopfstütze mit Kissenteil und Tragteil sowie Kulissenführung;
- Fig. 2: eine Explosionsdarstellung zur Fig. 1;
- Fig. 3: verschiedene Funktionsstellungen des Kissenteils;
- Fig. 4: die Kopfstütze in vollständiger Ausführungsform;
- Fig. 5: das Trägerelement des Kissenteils;

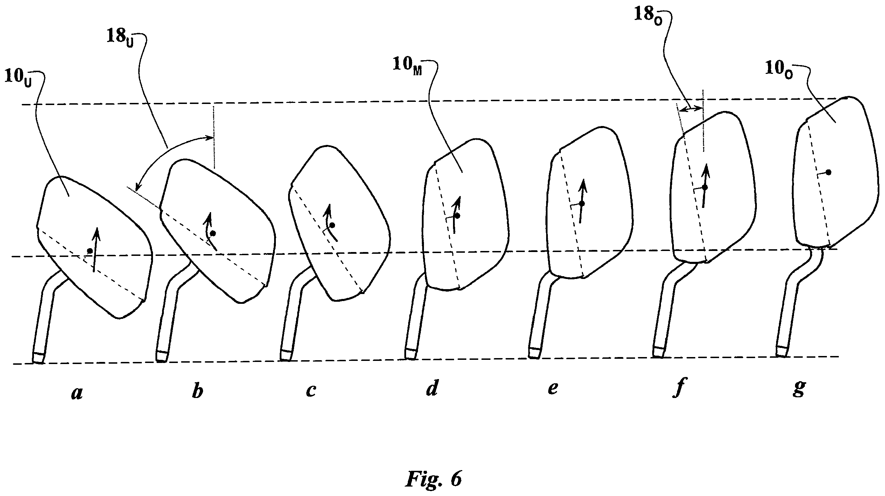

- Fig. 6: eine Bewegungsfolge des Kissenteils entlang des Verstellwegs;
- Fig. 7: schematisch den Verlauf des Verstellwegs der Kulissenführung.

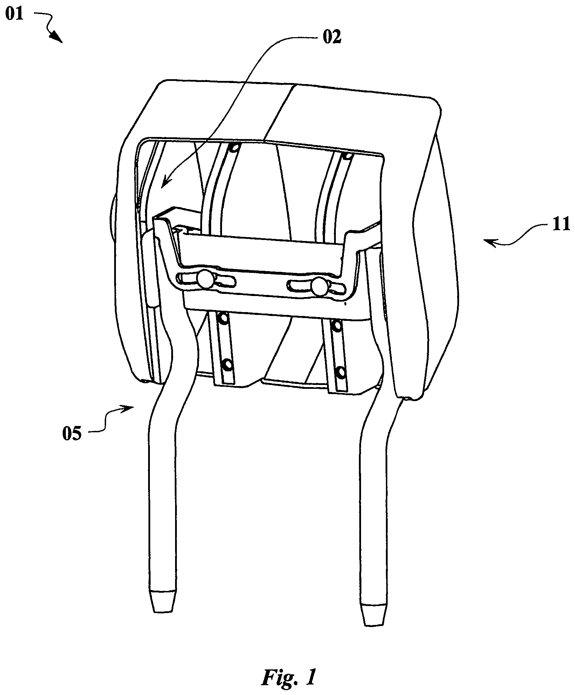

In **Figur 1** wird eine beispielhafte Ausführung für eine erfindungsgemäße Kopfstütze in einer perspektivischen Ansicht von hinten skizziert, wobei die Darstellung zur besseren Erkennbarkeit der relevanten Kulissenführung 02 auf das Stützelement 11 des Kissenteils 10 sowie das Tragteil 05 beschränkt wurde.

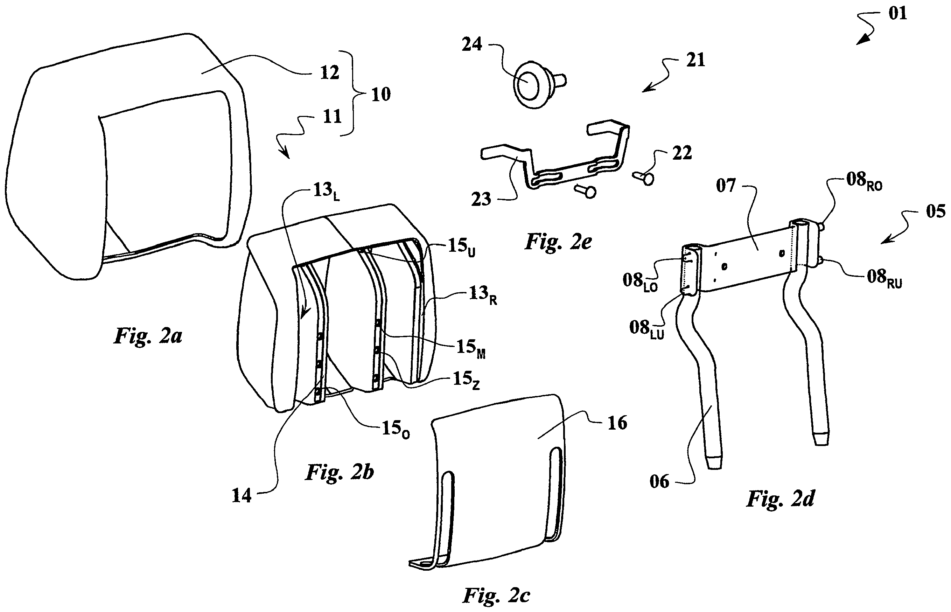

In den **Figuren 2** wird ergänzend zur Fig. 1 die Kopfstütze 01 in einer Explosionsdarstellung skizziert. Relevante Komponenten der Kopfstütze 01 sind das Kissenteil 10 sowie das Tragteil 05. Hierbei umfasst das Kissenteil 10 wiederum das in Fig. 2b skizzierte Stützelement 11 sowie ein auf der Vorderseite angebrachtes Polsterelement 12 - Fig. 2a. Rückseitig wird die Kulissenführung 02 am Kissenteil 10 von einem in Fig. 2c dargestelltem Abdeckelement 16 abgedeckt. Dieses weist entsprechende Ausnehmungen zur Durchführung des Tragteils 05 auf. Das Stützelement 11 wird in diesem Ausführungsbeispiel aus einem zweiteiligen Kunststoffbauteil gebildet, welches integral die zur Kulissenführung 02 erforderlichen Führungsnuten 13_{L} und 13_{R} spiegelbildlich zueinander auf linker und rechter Seite umfasst. Weiterhin zu erkennen sind zwei zwischen den Führungsnuten 13_{L}, 13_{R} angeordnete Abstützelemente 14, welche sich parallel entlang der Führungsnuten 13 erstrecken.

Das Kissenteil 10 kann in diesem Ausführungsbeispiel innerhalb eines Gebrauchsbereichs und des Weiteren in eine Nichtgebrauchsstellung verstellt werden. Hierbei stellt die untere Funktionsstellung 10_{U} die Nichtgebrauchsstellung dar, während hingegen der Bereich zwischen der oberen Funktionsstellung 10ₒ und der mittleren Funktionsstellung 10_{M} den als Kopfstütze verwendbaren oberen Abschnitt 03_{M-O} des Verstellwegs 03 des Kissenteils 10 darstellt.

Zur Sicherstellung der Position in den verschiedenen Funktionsstellungen sind in den Abstützelementen 14 mehrere Rastvertiefungen 15 zur Fixierung des Kissenteils 10 relativ zum Tragteil 05 in den jeweiligen Raststellungen vorhanden. Hierbei liegt eine Rastvertiefung 15_{U} für die untere Funktionsstellung 10_{U} am oberen Ende der Abstützelemente 14 und am anderen unteren Ende liegt eine Rastvertiefung 15_{O} für die obere Funktionsstellung 10_{O}. Weiterhin ist eine Rastvertiefung 15_{M} für die mittlere Funktionsstellung als untere Gebrauchsstellung vorhanden. Zur Ermöglichung einer definierten Zwischenstellung innerhalb des Gebrauchsbereichs weist das Abstützelement 14 weiterhin eine Rastvertiefung 15_{Z} zwischen der oberen Funktionsstellung 10_{O} und der mittleren Funktionsstellung 10_{M} auf.

Die Führungselemente 13 in Art einer Führungsnut weisen hierbei jeweils vordere zum Polsterelement weisende Führungsflächen sowie hintere zu den vorderen Führungsflächen gegenüberliegende hintere Führungsflächen auf. Zwischen diesen gleiten innerhalb der Führungsnut 13 die Gleitbolzen 08. Zur Realisierung der Schwenkbewegung bei Verstellung des Kissenteils 10 sind die Führungsnuten 13 abschnittsweise gekrümmt ausgeführt. Im Gebrauchsbereich zwischen der oberen Funktionsstellung 10_{O} und der mittleren Funktionsstellung 10_{M} verlaufen die Führungsnuten 13 noch im Wesentlichen geradlinig, womit eine im Wesentlichen geradlinige Verstellung des Kissenteils 10 verbunden ist. Bei Verlassen der mittleren Funktionsstellung 10_{M} in Richtung zur unteren Funktionsstellung 10_{U} weisen die Führungsnuten 13 jedoch einen bogenförmigen Verlauf auf, wodurch ein Schwenken des Kissenteils 10 bei der Bewegung in die Nichtgebrauchsstellung 10_{U} erfolgt. Der abschließende Weg in die Nichtgebrauchsstellung ist im Wesentlichen wiederum geradlinig ausgeführt, so dass eine nach unten gerichtete Bewegung des geschwenkten Kissenteils 10 erfolgt.

Gelagert wird die Kopfstütze 01 mittels der Kulissenführung 02 an dem in Fig. 2d skizzierten Tragteil 05. Dieses weist hierbei zunächst einmal zwei Tragstangen 06 zur Befestigung am jeweiligen Sitz auf. Hierbei ist es unerheblich, ob die Befestigung direkt am Sitz oder an einem sonstigen neben dem Sitz angeordneten Bauteil erfolgt. Insofern könnte ebenso die Kopfstütze an der Karosserie eines Fahrzeugs befestigt sein. In diesem Ausführungsbeispiel ist für die Verstellung des Kissenteils zwischen verschiedenen Gebrauchsstellungen als auch zur Verstellung in eine Nichtgebrauchsstellung keinerlei Verstellung zwischen Tragteil und Sitz erforderlich. Dies wird vielmehr durch die erfindungsgemäße Kulissenführung 02 ermöglicht. Unerheblich - jedoch praktisch überflüssig - ist es, wenn dennoch eine Verstellbarkeit zwischen Sitz und Tragteil vorhanden ist. Die beiden Tragstangen 06 des Tragteils 05 sind mittels einer Querverbindung 07 verbunden, welche in diesem Fall aus einem Metallblech hergestellt ist, jedoch ebenso andersartig ausgeführt sein kann. Die Querverbindung 07 bildet hierbei zugleich ein Anlageelement zur Anlage an den Abstützelementen 14 bei einer auf das Polsterteil 12 wirkenden Belastung.

Zur Realisierung der erfindungsgemäßen Kulissenführung 02 weist das Tragteil 05 vier sich in einer Horizontalachsenrichtung erstreckende Gleitbolzen 08 auf. Diesbezüglich befinden sich jeweils zwei Gleitbolzen 08_{O} und 08_{U} beabstandet übereinanderliegend, während diese 08_{LO}, 08_{RO} und 08_{LU}, 08_{RU} wiederum über die Mitte gespiegelt zueinander angeordnet sind. Diese Gleitbolzen 08 gleiten in den entsprechenden Führungsnuten 13_{L}, 13_{R}, wobei durch die beabstandeten Positionen der Gleitbolzen 08_{O}, 08_{U} sowohl die lineare Bewegung im Abschnitt zwischen der oberen Funktionsstellung 10_{O} und mittleren Funktionsstellung 10_{M} als auch die Schwenkbewegung in der Bewegung zwischen der mittleren Funktionsstellung 10_{M} und der unteren Funktionsstellung 10_{U} ermöglicht wird.

Ergänzend wird in Fig. 2e die Rast- und Entriegelungsvorrichtung mit den Rastelementen 22, welche eine obere Querverbindung 07 des Tragteils durchdringend in den Rastvertiefungen 15 einrasten können, skizziert. Die Entriegelung kann hierbei mittels einer seitlich verstellbaren Entriegelungsvorrichtung 23 erfolgen, welche die Rastelemente 22 aus den Rastvertiefungen 15 herausziehen kann. Zu diesem Zweck ist weiterhin ein Betätigungselement 24 beispielsweise in Art eines Druckknopfs vorhanden. Hierzu erforderliche Federungen oder sonstige Rückstellmechanismen sind nicht skizziert, erschließen sich dem Fachmann jedoch ohne Weiteres.

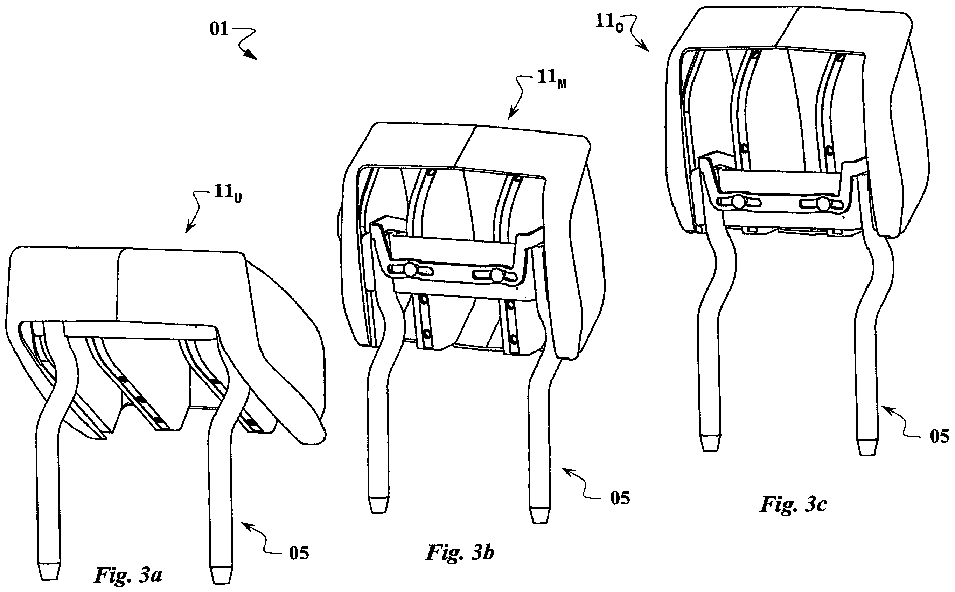

In den **Figuren 3** werden verschiedene Funktionsstellungen des Stützelements 11 skizziert, womit eine entsprechende Stellung des Kissenteils 10 der Kopfstütze 01 einher geht. Hierbei zeigt die Fig. 3a das Stützelement 11_{U} in der unteren Funktionsstellung 10_{U}, die Fig. 3b zeigt das Stützelement 11_{M} in der mittleren Funktionsstellung 10_{M}, während die Fig. 3c das Stützelement 11_{O} in der oberen Funktionsstellung 10_{O} zeigt.

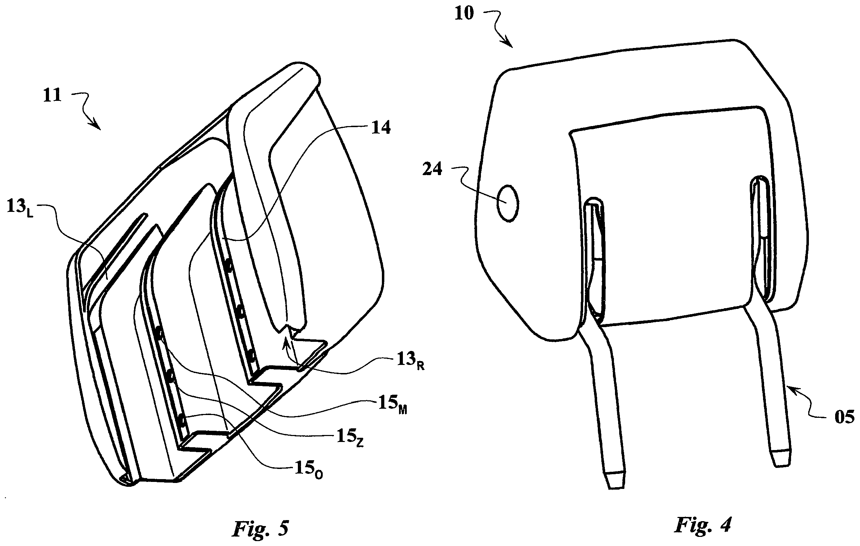

Ergänzend zur Ansicht aus Fig. 1 zeigt die **Figur 4** die Kopfstütze 01 in vollständiger Ausführung des Kissenteils 10 in Anordnung an dem Tragteil 05. Hierbei wird das Tragteil 05 durch das umgebende Polsterelement 12 auf vorderer Seite sowie durch das hintere Abdeckelement 16 verdeckt. Seitlich ist das Betätigungselement 24 zur Entriegelung der Rasteinrichtung erkennbar.

Die **Figur 5** skizziert ergänzend zur Fig. 2b nochmals das Stützelement 11 in weiterer Ansicht. Zu erkennen ist wiederum der Verlauf der Führungsnut 13_{L}, welche spiegelbildlich gegenüber der Führungsnut 13_{R} verläuft. Ebenso zu erkennen sind wiederum die Abstützelemente 14 mit den Rastvertiefungen 15.

Die **Figurenfolge 6** skizziert schematisch den Verstellweg des Kissenteils 10 entlang des Verstellwegs 03. In erster Fig. a befindet sich das Kissenteil 10 in unterer Funktionsstellung 10_{U}. Von dieser unteren Funktionsstellung 10_{U} ausgehend führt eine Verstellung des Kissenteils 10 aufgrund dieser beispielhaften Ausführung der Kulissenführung 02 zunächst zu einer im Wesentlichen nach oben gerichteten Verstellung des Kissenteils 10 - Fig. b. In unterer Funktionsstellung 10_{U} ist das Kissenteil 10 mit dem unteren Ende nach vorne und oberen Ende nach hinten geschwenkt und weißt eine Winkelstellung 18_{U} auf. Vor Erreichen der mittleren Funktionsstellung 10_{M} setzt ein Schwenken des Kissenteils 10 ein, wodurch es zu einer Änderung der Winkelstellung 18 kommt. In der in Fig. d skizzierten mittleren Funktionsstellung 10_{M} ist die Schwenkbewegung des Kissenteils 10 weitestgehend abgeschlossen. Bei weiterer Verstellung des Kissenteils 10 innerhalb des Gebrauchsbereichs von mittlerer Funktionsstellung 10_{M} bis zur oberen Funktionsstellung 10_{O} skizziert in Fig. g erfolgt im Wesentlichen ein nach oben gerichtetes lineares Verschieben, wobei das Kissenelement 10 eine nunmehr im Gegensatz zur unteren Funktionsstellung 10_{U} geänderte Winkelstellung 18_{O} in oberer Funktionsstellung 10_{O} besitzt.

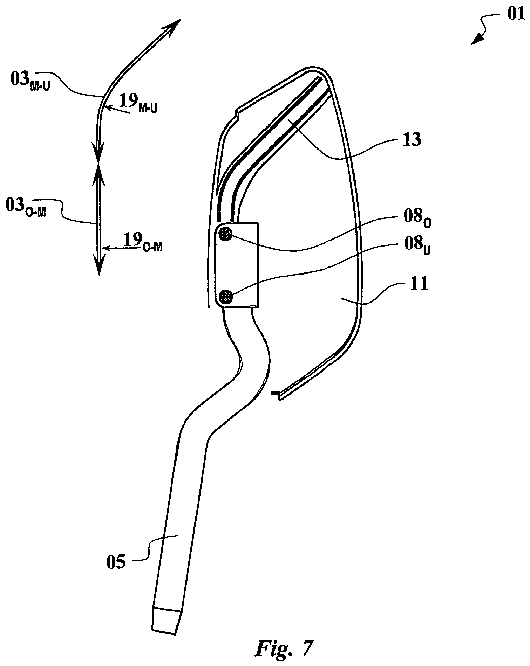

Die Verstellung des Kissenteils 10 entlang der Kulissenführung 02 wird nochmals in der Figur 7 schematisch skizziert. Zu erkennen ist die Kopfstütze 01 mit dem feststehenden Tragteil 05, welches die Gleitelemente 08_{O} und beabstandet hierzu 08_{U} als Bestandteile der Kulissenführung 02 umfasst. Das Stützelement 11 nebst dem Kissenteil 10 kann durch ein gleitendes Verschieben dieser Gleitelemente 08 entlang der Führungsnut 13 der Kulissenführung 02 verstellt werden. Der hierbei realisierte Verstellweg 03 teilt sich in diesem Ausführungsbeispiel in einen oberen Abschnitt 03_{O-M} zwischen oberer Funktionsstellung 10_{O} und mittlerer Funktionsstellung 10_{M} sowie einen unteren Abschnitt 03_{M-U} des Verstellwegs 03 zwischen der mittleren Funktionsstellung 10_{M} und unterer Funktionsstellung 10_{U} auf. Innerhalb des oberen Verstellwegs 03_{O-M} gibt es nahezu keinerlei Änderung der Winkelstellung 18 des Kissenteils und entsprechend ist der Krümmungsradius 19_{O-M} im Wesentlichen unendlich. Dem gegenüber findet in der Verstellung von der mittleren Funktionsstellung 10_{M} zur unteren Funktionsstellung 10_{U} entlang des unteren Verstellwegs 03_{M-U} eine zunächst zunehmende dann abnehmende Änderung der Winkelstellung 18 statt, wobei entsprechend der Krümmungsradius 19_{M-U} von unendlich auf einen definierten kleinsten Wert und wiederum zu unendlich wechselt.

## Patentansprüche

1. Kopfstütze (01) mit einem Kissenteil (10), welches zumindest ein auf einer Vorderseite angeordnetes Polsterelement (12) und ein das Polsterelement (12) stützendes Stützelement (11) umfasst, und mit einem Tragteil (05), welches Verbindungsmittel (06) zur starren Befestigung an/bei einem Fahrzeugsitz umfasst, und mit einer Kulissenführung (02), welche Führungselemente (13) und an den Führungselementen (13) entlang verschiebbare Gleitelemente (08) umfasst, wobei die Kulissenführung (02) eine Lagerung des Kissenteils (10) am Tragteil (05) bewirkt, und wobei die Kulissenführung (02) eine Verstellung des Kissenteils (10) zwischen einer unteren Funktionsstellung (10_{U}) und einer oberen Funktionsstellung (10_{O}) entlang eines Verstellweges (03) ermöglicht und die Kulissenführung (02) bei Verstellung des Kissenteils (01) entlang des Verstellwegs (03) zumindest abschnittsweise ein Verschwenken des Kissenteils (10) um eine Horizontalachse mit sich ändernder Winkelstellung (18) relativ zum Tragteil (05) bewirkt, die Führungselemente (13) am Kissenteil (10) und die Gleitelemente (08) am Tragteil (05) angeordnet sind, **dadurch**
**gekennzeichnet, dass** das Kissenteil (10) weiterhin zumindest ein Abstützelement (14) und das Tragteil (05) weiterhin zumindest ein Anlageelement aufweist, wobei zumindest zwischen der oberen Funktionsstellung (10_{O}) über den Verstellweg bis zu einer mittleren Funktionsstellung (10_{M}), das Abstützelement (14) zumindest bei einer von der Vorderseite auf das Kissenteil (10) wirkenden Belastung auf dem Anlageelement zur Anlage kommt..

2. Kopfstütze (01) nach Anspruch 1, **dadurch gekennzeichnet, dass** die Führungselemente (13) einen diskontinuierlichen und/oder zumindest abschnittsweise bogenförmigen Verlauf mit einem sich entlang des Verstellwegs (03) ändernden Krümmungsradius (19) aufweisen.

3. Kopfstütze (01) nach Anspruch 1 oder 2, **dadurch gekennzeichnet, dass** eine Änderung der Winkelstellung (18) bei abschnittsweiser Verstellung des Kissenteils (10) innerhalb des Verstellwegs zwischen der unteren Funktionsstellung (10_{U}) und einer mittleren Funktionsstellung (10_{M}) zumindest doppelt, insbesondere 5-fach, so hoch ist, wie jede Änderung der Winkelstellung (18) bei einer äquivalenten abschnittsweisen Verstellung innerhalb des Verstellwegs zwischen der mittleren Funktionsstellung (10_{M}) und der oberen Funktionsstellung (10_{O}).

4. Kopfstütze (01) nach einem der Ansprüche 1 bis 3, **dadurch gekennzeichnet, dass** sich die Winkelstellung (18) beim Verstellen von der oberen Funktionsstellung (10_{O}) zu einer mittleren Funktionsstellung (10_{M}) um höchstens 10°, insbesondere um höchstens 5°, ändert, während hingegen die Winkelstellung (18) beim Verstellen von der mittleren Funktionsstellung (10_{M}) zur unteren Funktionsstellung (10_{U}) sich um zumindest 10°, insbesondere um zumindest 15°, ändert.

5. Kopfstütze (01) nach einem der Ansprüche 1 bis 4, **dadurch gekennzeichnet, dass** zumindest zwei Führungselemente (13_{L} und 13_{R}) und zwei mal zwei Gleitelemente (08_{LO}, 08_{LU} und 08_{RO}, 08_{RU}) über eine Mittelebene symmetrisch gegenüberliegend vorhanden sind.

6. Kopfstütze (01) nach Anspruch 5, **dadurch gekennzeichnet, dass** das Führungselement (13) von einer vorderen Führungsfläche und einer der vorderen Führungsfläche gegenüberliegenden hinteren Führungsfläche gebildet wird, wobei zumindest ein vorderes gewölbtes Gleitelement (08) entlang der vorderen Führungsfläche und zumindest ein hinteres gewölbtes Gleitelement (08) entlang der hinteren Führungsfläche gleitet.

7. Kopfstütze (01) nach Anspruch 5 oder 6, **dadurch gekennzeichnet, dass** die Führungselemente (13) nutenförmig und die Gleitelemente (08) bölzenartig ausgeführt sind.

8. Kopfstütze (01) nach einem der Ansprüche 5 bis 7, **dadurch gekennzeichnet, dass** das Stützelement (11) als einstückiges oder mehrteiliges Kunststoffbauteil ausgeführt ist und die Führungselemente (13) und/oder Abstützelemente (14) integral umfasst.

9. Kopfstütze (01) nach einem der Ansprüche 1 bis 8, **dadurch gekennzeichnet, dass** das Kissenteil (10) auf der zur Vorderseite gegenüberliegenden Rückseite und/oder einer zum Fahrzeugsitz weisenden Unterseite ein die Führungselemente (13), Gleitelemente (08), Abstützelement (14) und/oder Anlageelement verdeckendes Abdeckelement (16) umfasst.

10. Kopfstütze (01) nach einem der Ansprüche 1 bis 9, **gekennzeichnet durch**, eine zwischen Kissenteil (10) und Tragteil (05) wirkende Rastvorrichtung (21), welche ein Verrasten beim Verschieben entlang des Verstellwegs (03), insbesondere in einer Mehrzahl von Raststellungen, ermöglicht.

11. Kopfstütze (01) nach Anspruch 10, **dadurch gekennzeichnet, dass** das Verrasten selbsttätig erfolgt und das Ausrasten, insbesondere bei einem Verstellen in Richtung von der oberen Funktionsstellung (10_{O}) zur unteren Funktionsstellung (10_{U}), einen erhöhten Kraftaufwand und/oder eine Betätigung einer Entriegelungsvorrichtung (23) erfordert.

12. Kopfstütze (01) nach Anspruch 10 und 11, **dadurch gekennzeichnet, dass** Abstützelement (14) zumindest eine Rastvertiefung (15) umfasst, in welcher ein am Tragteil (05) angeordnetes verstellbares Rastelement (22) einrasten kann.

13. Kopfstütze (01) nach Anspruch 11 und 12, **gekennzeichnet durch** eine Rückholeinrichtung umfassend ein mechanisches und/oder pneumatisches Federelement, wobei bei Betätigung der Entriegelungsvorrichtung das Federelement, insbesondere mittels eines Seilzugs, ein Verstellen des Kissenteils in Richtung von der oberen Funktionsstellung (10_{O}) zur unteren Funktionsstellung (10_{U}) bewirkt.

14. Kopfstütze (01) nach Anspruch 13, **dadurch gekennzeichnet, dass** die Entriegelungsvorrichtung einen elektromechanischen Aktuator und ein von der Kopfstütze (01) entfernt angeordnetes Betätigungselement umfasst.

15. Kopfstütze (01) nach einem der Ansprüche 1 bis 14, **gekennzeichnet durch** eine Positionsverstellvorrichtung, welche ein am Tragteil (05) angeordnetes von einem Elektromotor antreibbares Antriebsrad und das Kissenteil (10) ein sich über den gesamten Verstellweg (03) erstreckendes Abtriebselement umfasst, wobei bei einer Ansteuerung des Elektromotors eine Verstellung des Kissenelements (10) erfolgt.

## Claims

1. Headrest (01) having a cushion part (10) which comprises at least one padded element (12) arranged on a front side and a support element (11) supporting the padded element (12), and having a carrying part (05) which comprises connecting means (06) for rigid attachment to/at a vehicle seat, and having a slotted guide (02) which comprises guide elements (13) and sliding elements (08) which are displaceable along the guide elements (13), wherein the slotted guide (02) mounts the cushion part (10) on the carrying part (05), and wherein the slotted guide (02) enables the cushion part (10) to be moved along a movement path (03) between a lower functional position (10_{U}) and an upper functional position (10_{O}), and, as the cushion part (01) is moved along the movement path (03), the slotted guide (02) at least partially pivots the cushion part (10) about a horizontal axis, thereby changing the angle position (18) thereof relative to the carrying part (05), the guide elements (13) are arranged on the cushion part (10) and the sliding elements (08) are arranged on the carrying part (05), **characterised in that** the cushion part (10) additionally comprises at least one supporting element (14) and the carrying part (05) additionally comprises at least one bearing element, wherein, at least between the upper functional position (10_{O}) over the movement path to a middle functional position (10_{M}), the supporting element (14) comes to bear against the bearing element at least when a load acts on the cushion part (10) from the front side.

2. Headrest (01) according to claim 1, **characterised in that** the guide elements (13) have a discontinuous and/or at least partially curved profile with a radius of curvature (19) that varies along the movement path (03).

3. Headrest (01) according to claim 1 or 2, **characterised in that** a change in the angle position (18) during a partial movement of the cushion pad (10) within the movement path between the lower functional position (10_{U}) and a middle functional position (10_{M}) is at least twice as large, in particular 5 times as large, as any change in the angle position (18) during an equivalent partial movement within the movement path between the middle functional position (10_{M}) and the upper functional position (10_{O}).

4. Headrest (01) according to any one of claims 1 to 3, **characterised in that** the angle position (18) changes by at most 10°, in particular by at most 5°, during the movement from the upper functional position (10_{O}) to a middle functional position (10_{M}), whereas in contrast the angle position (18) changes by at least 10°, in particular by at least 15°, during the movement from the middle functional position (10_{M}) to the lower functional position (10_{U}).

5. Headrest (01) according to any one of claims 1 to 4, **characterised in that** at least two guide elements (13_{L} and 13_{R}) and two times two sliding elements (08_{LO}, 08_{LU} and 08_{RO}, 08_{RU}) are situated symmetrically opposite one another in relation to a central plane.

6. Headrest (01) according to claim 5, **characterised in that** the guide element (13) is formed by a front guide surface and a rear guide surface located opposite the front guide surface, wherein at least one front curved sliding element (08) slides along the front guide surface and at least one rear curved sliding element (08) slides along the rear guide surface.

7. Headrest (01) according to claim 5 or 6, **characterised in that** the guide elements (13) are configured in a groove-like manner and the sliding elements (08) are configured in a pin-like manner.

8. Headrest (01) according to any one of claims 5 to 7, **characterised in that** the support element (11) is configured as a one-piece or multi-part plastic component and integrally comprises the guide elements (13) and/or supporting elements (14).

9. Headrest (01) according to any one of claims 1 to 8, **characterised in that** the cushion part (10) comprises, on the rear side located opposite the front side and/or on an underside facing towards the vehicle seat, a covering element (16) which covers the guide elements (13), sliding elements (08), supporting element (14) and/or bearing element.

10. Headrest (01) according to any one of claims 1 to 9, **characterised by** a latching device (21) which acts between the cushion part (10) and the carrying part (05) and which enables a latching, in particular in a plurality of latching positions, during the movement along the movement path (03).

11. Headrest (01) according to claim 10, **characterised in that** the latching takes place automatically and the release requires an increased application of force and/or actuation of an unlocking device (23), in particular during a movement in the direction from the upper functional position (10_{O}) to the lower functional position (10_{U}).

12. Headrest (01) according to claim 10 and 11, **characterised in that** the supporting element (14) comprises at least one latching depression (15), into which a movable latching element (22) arranged on the carrying part (05) can latch.

13. Headrest (01) according to claim 11 and 12, **characterised by** a return device comprising a mechanical and/or pneumatic spring element, wherein, when the unlocking device is actuated, the spring element causes the cushion part to move in the direction from the upper functional position (10_{O}) to the lower functional position (10_{U}), in particular by means of a cable pull.

14. Headrest (01) according to claim 13, **characterised in that** the unlocking device comprises an electromechanical actuator and an actuation element which is arranged remote from the headrest (01).

15. Headrest (01) according to any one of claims 1 to 14, **characterised by** a position adjustment device comprising a drive wheel, which is arranged on the carrying part (05) and which can be driven by an electric motor, and the cushion part (10) a driven element which extends over the entire movement path (03), wherein the cushion element (10) is moved when the electric motor is actuated.

## Revendications

1. Appuie-tête (01) comprenant une partie coussin (10), laquelle contient au moins un élément rembourré (12) disposé sur un côté avant et un élément d'appui (11) qui supporte l'élément rembourré (12), et une partie porteuse (05), laquelle comporte des moyens de liaison (06) pour la fixation rigide à/sur un siège de véhicule, et comprenant un guide coulissant (02), lequel comporte des éléments de guidage (13) et des éléments glissants (08) qui peuvent coulisser le long des éléments de guidage (13), le guide coulissant (02) réalisant un positionnement de la partie coussin (10) sur la partie porteuse (05) et le guide coulissant (02) permettant un réglage de la partie coussin (10) entre une position fonctionnelle inférieure (10_{U}) et une position fonctionnelle supérieure (10_{O}) le long d'une course de réglage (03), et le guide coulissant (02), lors du réglage de la partie coussin (10) le long de la course de réglage (03), réalisant au moins dans certaines sections un basculement de la partie coussin (10) autour d'un axe horizontal avec une position angulaire (18) variable par rapport à la partie porteuse (05), les éléments de guidage (13) étant disposés au niveau de la partie coussin (10) et les éléments glissants (08), au niveau de la partie porteuse (05), **caractérisé en ce que** la partie coussin (10) comporte, en outre, au moins un élément de support (14), et la partie porteuse (05), en outre, au moins un élément de positionnement, l'élément de support (14) venant en contact sur l'élément de positionnement, au moins entre la position fonctionnelle supérieure (10_{O}) par la course de réglage jusqu'à une position fonctionnelle médiane (10_{M}), au moins lors d'une contrainte agissant sur la partie coussin (10) du côté avant.

2. Appuie-tête (01) selon la revendication 1, **caractérisé en ce que** les éléments de guidage (13) présentent un tracé arqué, au moins par section, et/ou discontinu, avec un rayon de courbure (19) se modifiant le long de la course de réglage (03).

3. Appuie-tête (01) selon la revendication 1 ou 2, **caractérisé en ce qu'**une modification de la position angulaire (18), est, lors du réglage par section de la partie coussin (10) au sein de la course de réglage, entre la position fonctionnelle inférieure (10_{U}) et une position fonctionnelle médiane (10_{M}), au moins deux fois, en particulier cinq fois, aussi importante que chaque modification de la position angulaire (18), lors d'un réglage, par section, équivalent, au sein de la course de réglage, entre la position fonctionnelle médiane (10_{M}) et la position fonctionnelle supérieure (10_{O}).

4. Appuie-tête (01) selon l'une des revendications 1 à 3, **caractérisé en ce que** la position angulaire (18) se modifie, lors du réglage de la position fonctionnelle supérieure (10_{O}) vers une position fonctionnelle médiane (10_{M}), d'au maximum 10°, en particulier au maximum 5°, tandis qu'au contraire, la position angulaire (18), lors du réglage de la position fonctionnelle médiane (10_{M}) vers la position fonctionnelle inférieure (10_{U}) se modifie d'au moins 10°, en particulier, d'au moins 15°.

5. Appuie-tête (01) selon l'une des revendications 1 à 4, **caractérisé en ce qu'**au moins deux éléments de guidage (13_{L} et 13_{R}) et deux fois deux éléments glissants (08L_{O}, 08L_{U} et 08R_{O}, 08R_{U}) sont symétriquement opposés sur un plan médian.

6. Appuie-tête (01) selon la revendication 5, **caractérisé en ce que** l'élément de guidage (13) est formé d'une face de guidage avant et d'une face de guidage arrière, opposée à la face de guidage avant, au moins un élément glissant (08) courbé, avant, glissant le long de la face de guidage avant et au moins un élément glissant (08) arqué, arrière, glissant le long de la face de guidage arrière.

7. Appuie-tête (01) selon la revendication 5 ou 6, **caractérisé en ce que** les éléments de guidage (13) sont réalisés en forme de rainure et les éléments glissants (08), de type boulon.

8. Appuie-tête (01) selon l'une des revendications 5 à 7, **caractérisé en ce que** l'élément d'appui (11) est réalisé en tant que composant en matière plastique en une ou plusieurs partie(s) et comprend les éléments de guidage (13) et/ou les éléments de support (14).

9. Appuie-tête (01) selon l'une des revendications 1 à 8, **caractérisé en ce que** la partie coussin (10) comprend, sur le côté arrière opposé au côté avant et/ou un côté inférieur en direction du siège du véhicule, un élément de recouvrement (16), recouvrant les éléments de guidage (13), les éléments glissants (08), l'élément de support (14) et/ou l'élément de positionnement.

10. Appuie-tête (01) selon l'une des revendications 1 à 9, **caractérisé par** un dispositif d'enclenchement (21) agissant entre la partie coussin (10) et la partie porteuse (05), qui permet un verrouillage, lors du déplacement le long de la course de réglage (03), en particulier dans une pluralité de positions d'enclenchement.

11. Appuie-tête (01) selon la revendication 10, **caractérisé en ce que** le verrouillage s'effectue de lui-même, et le déverrouillage, en particulier lors d'un réglage en direction de la partie fonctionnelle supérieure (10_{O}) vers la partie fonctionnelle inférieure (10_{U}), nécessite une force plus élevée, et/ou un actionnement d'un dispositif de déverrouillage (23).

12. Appuie-tête (01) selon la revendication 10 et 11, **caractérisé en ce que** l'élément de support (14) comprend au moins un creux d'encliquetage (15) dans lequel un élément d'enclenchement (22) réglable, disposé au niveau de la partie porteuse (05), peut s'engager.

13. Appuie-tête (01) selon la revendication 11 et 12, **caractérisé par** un dispositif de rappel, comprenant un élément ressort pneumatique et/ou mécanique, l'élément ressort occasionnant, lors de l'actionnement du dispositif de déverrouillage, un réglage de la partie coussin, en direction de la position fonctionnelle supérieure (10_{O}) vers la position fonctionnelle inférieure (10_{U}), en particulier au moyen d'un câble de traction.

14. Appuie-tête (01) selon la revendication 13, **caractérisé en ce que** le dispositif de déverrouillage comprend un actionneur électromécanique et un élément d'actionnement disposé éloigné de l'appuie-tête (01).

15. Appuie-tête (01) selon l'une des revendications 1 à 14, **caractérisé par** un dispositif de réglage de position, qui comprend une roue d'entraînement pouvant être entrainée par un moteur électrique et disposée au niveau de la partie porteuse (05) et la partie coussin (10), un élément de mouvement s'étendant sur toute la course de réglage (03), un réglage de la partie coussin (10) s'effectuant lorsque le moteur électrique est commandé.
